# EUROPEAN PATENT SPECIFICATION

(11) **EP 4 167 812 B1**
(45) Date of publication and mention of the grant of the patent: **20.03.2024**
(21) Application number: 21733586.8
(22) Date of filing: 17.06.2021
(51) Int. Cl.: A47J 31/46, A47J 31/32, A47J 31/50

(54) **A COFFEE DISPENSER SYSTEM**
KAFFEEAUSGABESYSTEM
SYSTÈME DE DISTRIBUTION DE CAFÉ

(30) Priority: 18.06.2020 NL 2025854
(43) Date of publication of application: 26.04.2023
(73) Proprietor: Bravilor Bonamat BV, 1704 RD Heerhugowaard (NL)
(72) Inventor: HUIBERTS, Johannes Theodorus Emerentia, 1704 RD Heerhugowaard (NL); VERHOEVEN, Romanus Eduard, 1704 RD Heerhugowaard (NL)
(74) Representative: van Breda, Jacobus
(86) International application number: PCT/NL2021/050379
(87) International publication number: WO 2021/256926

(56) References cited:
- EP-A1- 3 298 934
- US-A- 3 031 947
- US-A- 3 345 934

## Description

The invention relates to a coffee dispenser system, comprising a coffee brewer unit and an outlet channel for coffee.

Such a coffee dispenser system is described in the at the priority date not yet published Dutch patent application 202275. The coffee brewer unit comprises a vessel for receiving and mixing a powder material and hot liquid, a filter beneath the vessel, a gas supply that connects through a duct to the vessel for supplying pressurized gas into the vessel, and an outlet for extracted liquid at an outlet side of the filter which is opposite to the vessel, wherein the outlet connects to an outlet duct for the extracted liquid.

Apart from the fact that the quality of the coffee of such a coffee dispenser system is top-of-the-line, one of the further advantages of this coffee dispenser system is that it is possible to brew large quantities of coffee without compromising the quality of the coffee. It is an object of the invention to make full use of this advantageous property.

EP 3 298 934, US 3,031,947 and US 3,345,934 each disclose a coffee dispenser system comprising a coffee brewer unit, a container and a coffee supply channel between the coffee brewer unit and the container to provide a fluid connection between the coffee brewer unit and the container for receiving and holding coffee from the coffee brewer unit, and an outlet channel for coffee connected to the container.

According to EP 3 298 934 and US 3,031,947 the coffee supply channel between the coffee brewer unit and the container, and the outlet channel for coffee both connect to the container at a bottom side of the container, and the coffee supply channel that connects to the container extends upwardly inside the container up to a highest level. This highest level corresponds to the maximum level that the coffee can reach in the container.

The coffee dispenser system of the invention is provided with the features of one or more of the appended claims.

According to the invention at said highest level an air relief chamber is provided to release the air from the coffee transported through the coffee supply channel, and from the air relief chamber a coffee mix channel extends downwardly to above and near to the bottom of the container. This arranges that the coffee enters the container, or when the container is not effectively used, can leave the container immediately through the outlet channel, with minimal heat loss. Furthermore this construction with the coffee mix channel secures that the composition of the coffee maintains unchanged when entering into the container.

With the coffee dispenser system of the invention it is possible to fill from the container a full jug in one go, but also to absorb peaks in demand by repetitiously dosing cups of coffee from the container and at the same time replenish the container with the largest possible batches from the coffee brewer unit.

An example of a peak is for instance the coffee demand during a break in the performance in a theater, or the coffee demand during a breakfast buffet in a restaurant. When the coffee brewer unit is capable to supply batches of 480cc coffee, 4 cups of 120cc coffee can be continuously dosed in a period of time that is much shorter than when each cup of coffee is freshly and separately made at the very time it is required. With the coffee dispenser system of the invention the dosing times for coffee will be comparable with instant drinks. In addition the advantage is attained that with these large batches, the first-cup temperature is no longer problematic as is the case in the prior art.

It is preferable that the container is provided with heat insulating properties to keep the coffee "fresh". It is for instance feasible that the container is embodied as a vacuum jacket. An (inverted) thermos bottle with screw connection to a bottom plate that closes off the thermos bottle is an 'easy to clean' and relatively inexpensive embodiment.

One notable advantage is that the container can be provided without heating facilities, which also supports keeping the coffee fresh.

The coffee supply channel and the outlet channel for coffee both connect to the container at a bottom side, notably at said bottom plate, of the container. This makes possible that the coffee dispenser system of the invention could also be used without the container being operational, so that freshly brewed coffee can go through the coffee supply channel and practically immediately flow into the outlet channel for coffee.

Suitably the container is provided with an air vent channel which determines a maximum possible level of coffee in the container.

It is beneficial that the dispenser system further comprises a sensor system for measuring a level of coffee in the container. This is particularly beneficial when the sensor system connects to a control system that drives the coffee brewer unit so as to maintain the level of coffee in the container between a predefined minimum and maximum level.

The invention will hereinafter be further elucidated with reference to the drawing of an exemplary embodiment of a deskinning apparatus according to the invention that is not limiting as to the appended claims.

In the drawing:
- figure 1 shows an example of a coffee dispenser system outside the scope of the invention which is provided for illustrative purposes; and
- figure 2 shows an embodiment of a coffee dispenser system according to the invention.

Whenever in the figures the same reference numerals are applied, these numerals refer to the same parts.

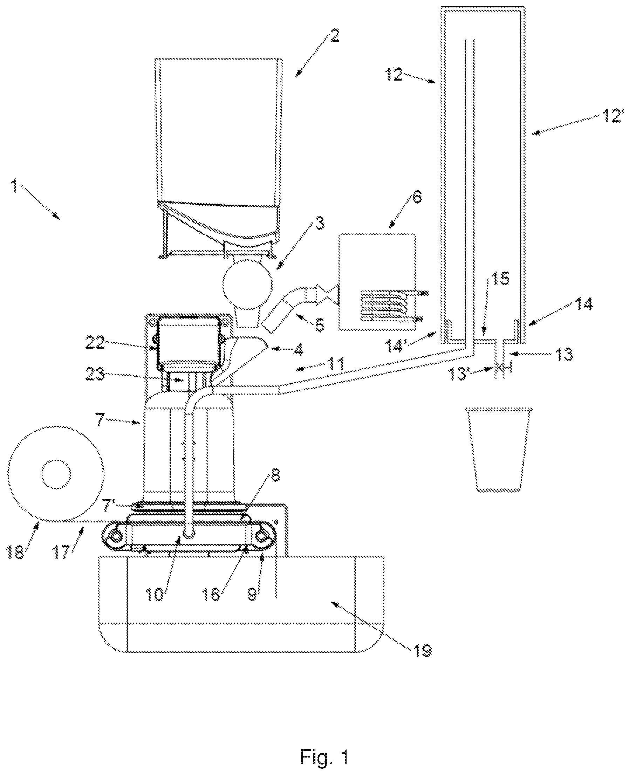

In figure 1 a coffee dispenser system is shown comprising a coffee brewer unit 1 with a canister 2 for coffee beans. Below the canister 2 is a grinder 3 that provides grinded beans to a chute 4. The chute 4 also receives hot water from a duct 5 that receives the hot water from a heater 6 to which the duct 5 is connected. The hot water ensures that the grinded beans from the grinder 3 are transported and received in a vessel 7 to which the chute 4 connects. To accommodate one and another the vessel 7 has a closable opening at a location 23 at the upper side of the vessel 7 for receiving both the powder material and the hot liquid. The closable opening is provided with a (not shown) valve at the height of arrow 23 for opening and closing of said opening, wherein the valve is arranged to provide an airtight closure of the opening of the vessel 7 such that the vessel 7 is enabled to be pressurized by the operation of a gas supply pump. The location and operation of the valve is known from the prior art document EP-A-0 546 498; it is therefore superfluous to further show this in the drawing.

In connection with the pressurization of the vessel 7, it is preferred, although not necessary, that the vessel 7 is up-and-down movable to enable that in the down position the vessel 7 can engage a filter 8 beneath the vessel 7 and act on that filter 8 as a seal.

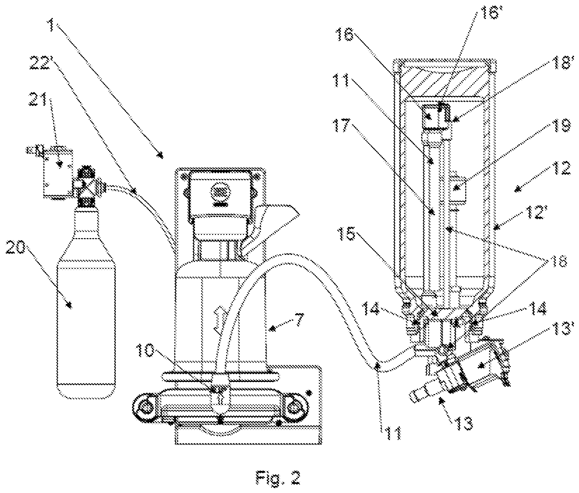

In figure 2 an exemplary embodiment of a coffee dispenser system of the invention is shown with a coffee brewer unit 1, wherein emphasis is on an inert gas container 20 which supplies inert gas through a valve 21 and a gas supply channel 22 for pressurization of the vessel 7. Like in the coffee dispenser system of figure 1, also in the system of figure 2 it is preferred, although not necessary, that the vessel 7 is up-and-down movable to enable that in the down position the vessel 7 can engage a filter 8 beneath the vessel 7 and act on that filter 8 as a seal.

In both systems of figure 1 and figure 2 the coffee brewer unit 1 has an outlet 10, which outlet 10 is intended for release of extracted liquid at an outlet side of the filter 8 which is opposite to the vessel 7. Said outlet 10 connects to a coffee supply channel 11 for the extracted liquid. This coffee supply channel 11 connects the coffee brewer unit 1 with a container 12 to provide a fluid connection between the coffee brewer unit 1 and the container 12 that receives and holds coffee from the coffee brewer unit 1. Further figure 1 and figure 2 show that the container 12 is provided with an outlet channel 13 with a valve 13' for controlled release of coffee to be dispensed from the container 12.

Preferably the container 12 is provided with heat insulating properties. Preferably to that end the container 12 is embodied as a thermos bottle 12' provided with a screw connection 14 for connecting to a bottom plate 15 that closes off the thermos bottle 12'. One favorable feature is that the container 12 is provided without heating facilities.

The coffee supply channel 11 and the outlet channel 13 for coffee both connect to the container 12 at a bottom side of the container 12, preferably to the container's bottom plate 15.

With reference to figure 2 showing the construction of the container 12 in accordance with the invention, it is shown that the coffee supply channel 11 that connects to the container extends upwardly inside the container 12 up to a highest level. It is shown in this figure 2 that at said highest level an air relief chamber 16 is provided to release air from the coffee transported through the coffee supply channel 11. For this purpose the air relief chamber 16 is provided with an air relief aperture 16'. Extending downwards from the air relief chamber 16 is a coffee mix channel 17 which extends to above and near to the bottom of the container 12.

Further figure 2 shows that the container 12 is provided with an air vent channel 18 which determines a maximum possible level 18' of coffee in the container 12.

The dispenser system of the invention further preferably comprises a sensor system 19 for measuring a level of coffee in the container 12. The sensor system 19 connects to a control system (not shown) that drives the coffee brewer unit 1 so as to maintain the level of coffee in the container 12 between a predefined minimum and maximum level.

Although the invention has been discussed in the foregoing with reference to exemplary embodiments of the coffee dispenser system of the invention, the invention is not restricted to these particular embodiments which can be varied in many ways without departing from the invention. The discussed exemplary embodiments shall therefore not be used to construe the appended claims strictly in accordance therewith. On the contrary the embodiments are merely intended to explain the wording of the appended claims without intent to limit the claims. The scope of protection of the invention shall therefore be construed in accordance with the appended claims only, wherein a possible ambiguity in the wording of the claims shall be resolved using these exemplary embodiments.

## Claims

1. A coffee dispenser system, comprising a coffee brewer unit (1), a container (12) and a coffee supply channel (11) between the coffee brewer unit (1) and the container (12) to provide a fluid connection between the coffee brewer unit (1) and the container (12) for receiving and holding coffee from the coffee brewer unit (1), and an outlet channel (13) for coffee which is connected to the container (12), wherein the coffee supply channel (11) and the outlet channel (13) for coffee both connect to the container (12) at a bottom side of the container (12), and the coffee supply channel (11) that connects to the container (12) extends upwardly inside the container (12) up to a highest level, **characterized in that** at said highest level an air relief chamber (16) is provided to release air from the coffee transported through the coffee supply channel (11), and that from the air relief chamber (16) a coffee mix channel (17) extends downwardly to above and near to the bottom of the container (12).

2. The coffee dispenser system of claim 1, **characterized in that** the container (12) is provided with heat insulating properties.

3. The coffee dispenser system of claim 1 or 2, **characterized in that** the container (12) is embodied as a thermos bottle (12') provided with a screw connection (14) to a bottom plate (15) that closes off the thermos bottle (12').

4. The coffee dispenser system of any one of claims 1 - 3, **characterized in that** the container (12) is provided without heating facilities.

5. The coffee dispenser system of any one of claims 1 - 4, **characterized in that** the container (12) is provided with an air vent channel (18) which determines a maximum possible level of coffee in the container (12).

6. The coffee dispenser system of any one of claims 1 - 5, **characterized in that** the dispenser system further comprises a sensor system (19) for measuring a level of coffee in the container (12).

7. The coffee dispenser system of claim 6, **characterized in that** the sensor system (19) connects to a control system that drives the coffee brewer unit (1) so as to maintain the level of coffee in the container (12) between a predefined minimum and maximum level.

## Patentansprüche

1. Kaffeeausgabesystem, das eine Kaffeebrüheinheit (1), einen Behälter (12) und einen Kaffeezufuhrkanal (11) zwischen der Kaffeebrüheinheit (1) und dem Behälter (12) aufweist, um eine Fluidverbindung zwischen der Kaffeebrüheinheit (1) und dem Behälter (12) zur Aufnahme und zum Halten von Kaffee aus der Kaffeebrüheinheit (1) bereitzustellen, und einen Auslasskanal (13) für Kaffee, der mit dem Behälter (12) verbunden ist, wobei der Kaffeezufuhrkanal (11) und der Auslasskanal (13) für Kaffee beide an einer Unterseite des Behälters (12) mit dem Behälter (12) verbunden sind, und der Kaffeezufuhrkanal (11), der mit dem Behälter (12) verbunden ist, sich innerhalb des Behälters (12) nach oben bis zu einem höchsten Niveau erstreckt, **dadurch gekennzeichnet, dass** auf dem höchsten Niveau eine Entlüftungskammer (16) vorgesehen ist, um Luft aus dem durch den Kaffeezufuhrkanal (11) transportierten Kaffee abzulassen, und dass sich von der Entlüftungskammer (16) ein Kaffeemischkanal (17) nach unten bis oberhalb und nahe dem Boden des Behälters (12) erstreckt.

2. Kaffeeausgabesystem nach Anspruch 1, **dadurch gekennzeichnet, dass** der Behälter (12) mit wärmeisolierenden Eigenschaften ausgestattet ist.

3. Kaffeeausgabesystem nach Anspruch 1 oder 2, **dadurch gekennzeichnet, dass** der Behälter (12) als eine Thermosflasche (12') ausgeführt ist, die mit einer Schraubverbindung (14) zu einer Bodenplatte (15), die die Thermosflasche (12') verschließt, versehen ist.

4. Kaffeeausgabesystem nach einem der Ansprüche 1 - 3,
**dadurch gekennzeichnet, dass** der Behälter (12) ohne Heizvorrichtung ausgestattet ist.

5. Kaffeeausgabesystem nach einem der Ansprüche 1 - 4,
**dadurch gekennzeichnet, dass** der Behälter (12) mit einem Luftkanal (18), der einen maximal möglichen Pegel des Kaffees in dem Behälter (12) bestimmt, versehen ist.

6. Kaffeeausgabesystem nach einem der Ansprüche 1 - 5,
**dadurch gekennzeichnet, dass** das Ausgabesystem ferner ein Sensorsystem (19) zum Messen des Pegels des Kaffees in dem Behälter (12) aufweist.

7. Kaffeeausgabesystem nach Anspruch 6, **dadurch gekennzeichnet, dass** das Sensorsystem (19) mit einem Steuerungssystem verbunden ist, das die Kaffeebrüheinheit (1) so ansteuert, dass der Pegel des Kaffees in dem Behälter (12) zwischen einem vordefinierten Mindest- und Höchstpegel gehalten wird.

## Revendications

1. Système distributeur de café, comprenant une unité d'infusion de café (1), un récipient (12) et un canal d'alimentation en café (11) entre l'unité d'infusion de café (1) et le récipient (12) pour fournir une liaison fluidique entre l'unité d'infusion de café (1) et le récipient (12) pour recevoir et contenir du café provenant de l'unité d'infusion de café (1), et un canal de sortie (13) pour du café qui est relié au récipient (12), dans lequel le canal d'alimentation en café (11) et le canal de sortie (13) pour du café sont tous les deux reliés au récipient (12) au niveau d'un côté de fond du récipient (12), et le canal d'alimentation en café (11) qui est relié au récipient (12) s'étend vers le haut à l'intérieur du récipient (12) jusqu'à un niveau le plus élevé, **caractérisé en ce que**, audit niveau le plus élevé, une chambre d'évacuation d'air (16) est prévue pour libérer de l'air du café transporté à travers le canal d'alimentation en café (11), et **en ce que**, à partir de la chambre d'évacuation d'air (16), un canal de mélange de café (17) s'étend vers le bas jusqu'au-dessus et à proximité du fond du récipient (12) .

2. Système distributeur de café selon la revendication 1, **caractérisé en ce que** le récipient (12) est doté de propriétés d'isolation thermique.

3. Système distributeur de café selon la revendication 1 ou 2, **caractérisé en ce que** le récipient (12) est mis en œuvre en tant qu'une bouteille thermos (12') dotée d'une liaison vissée (14) à une plaque de fond (15) qui ferme la bouteille thermos (12').

4. Système distributeur de café selon l'une quelconque des revendications 1 à 3, **caractérisé en ce que** le récipient (12) est prévu sans élément de chauffage.

5. Système distributeur de café selon l'une quelconque des revendications 1 à 4, **caractérisé en ce que** le récipient (12) est doté d'un canal de prise d'air (18) qui détermine un niveau possible maximal de café dans le récipient (12).

6. Système distributeur de café selon l'une quelconque des revendications 1 à 5, **caractérisé en ce que** le système distributeur comprend en outre un système capteur (19) pour mesurer un niveau de café dans le récipient (12).

7. Système distributeur de café selon la revendication 6, **caractérisé en ce que** le système capteur (19) est relié à un système de commande qui entraîne l'unité d'infusion de café (1) de manière à maintenir le niveau de café dans le récipient (12) entre des niveaux minimal et maximal prédéfinis.
